# EUROPEAN PATENT APPLICATION

(11) **EP 1 498 162 A1**
(43) Date of publication of application: **19.01.2005**
(21) Application number: 04015666.3
(22) Date of filing: 02.07.2004
(51) Int. Cl.: A63F 13/00

(54) **Mahjong game machine and control program for the same**

(30) Priority: 04.07.2003 JP 2003192399
(71) Applicant: Aruze Corp., Tokyo (JP)
(72) Inventor: Nara, Toshiomi, Tokyo (JP)
(74) Representative: HOFFMANN - EITLE

(57) **Abstract**

The present invention provides a mahjong game machine which enables a player to sufficiently enjoy an original interest or fun of the mahjong game and also enables the player to enjoy the mahjong game without becoming bored. The mahjong game machine (10) includes a display device (13) and provides a mahjong game in which a player plays the game against an opponent character. The mahjong game machine (10) comprises set data storing means which stores a plurality of set data on the setting of game rules corresponding to a plurality of effect image data, an effect image display device which displays the effect images on the display device based on the selected effect image data when the selection images are displayed, and set means which performs the setting of the game rules based on the set data corresponding to the selected effect image data.

## Description

### CROSS-REFERENCES TO THE RELATED APPLICATIONS

This application is based upon and claims the priority from a prior Japanese patent application No. 2003-192399, filed on July 4, 2003, in Japan, entire contents of which are incorporated herein by reference.

This application is related to co-pending U.S. patent applications referred to as prior Japanese patent application Nos. 2003-192398, 2003-271136, 2003-271138, 2003-192404, 2003-271140, 2003-271141, 2003-192406, filed in the United States on the even date herewith.

### BACKGROUND OF THE INVENTION

### 1. FIELD OF THE INVENTION:

The present invention relates to a mahj ong game machine which provides a mahjong game and a control program for a mahjong game machine.

### 2. RELATED ART:

Conventionally, there has been known a mahjong game machine which provides a mahjong game in which a player plays against an opponent character (see Japanese Unexamined Utility Model Publication Hei4(1992)-70089, for example). In such a mahjong game machine which provides the mahjong game, an image which shows tiles in hand and discarded tiles of the player and an image of discarded tiles of the opponent character are displayed on display means of a display device or the like. Then, the mahjong game advances such that the player and the opponent character repeat the tile drawing operation and the tile discarding operation by the manipulation of the player or the like. The player tries to move his or her tiles in hand toward the complete combination ('hora' (winning or accomplishment)) by repeating the tile drawing operations and the tile discarding operations and when the player wins the game against the opponent character with 'hora' before the opponent character, the player can receive points corresponding to completed 'yaku' (combination) accomplishments which are combinations of tiles from the opponent character and, at the same time, effect images having a given story such as images which show a scene in which the opponent character praises the player for his or her mahj ong strength are displayed on the display device.

However, in the above-mentioned mahj ong game machine, for example, the setting of game rules on the game such as so-called "kuitan atozuke ari or ari ari (a rule which admits "hora" so long as one "yaku" (combination) is accomplished under any conditions)" or "ryanhan shibari (a rule which admits "hora" only when two "yaku" are accomplished)" is always fixed, the mahjong game becomes a monotonous game lacking in strategy. That is, the player simply makes efforts to accomplish "hora" merely aiming at only the watching of an effect image by winning the game against the opponent character. Accordingly, the player cannot sufficiently enjoy the original interest or fun of the mahj ong game.

### SUMMARY OF THE INVENTION

The present invention has been made in view of the above-mentioned drawback and it is an object of the present invention to provide a mahjong game machine and a control program for a mahjong game machine which enable a player to sufficiently enjoy an original interest or fun of a mahj ong game and also enable the player to enjoy the mahjong game without becoming bored.

To achieve the above-mentioned object, the present invention provides the following.

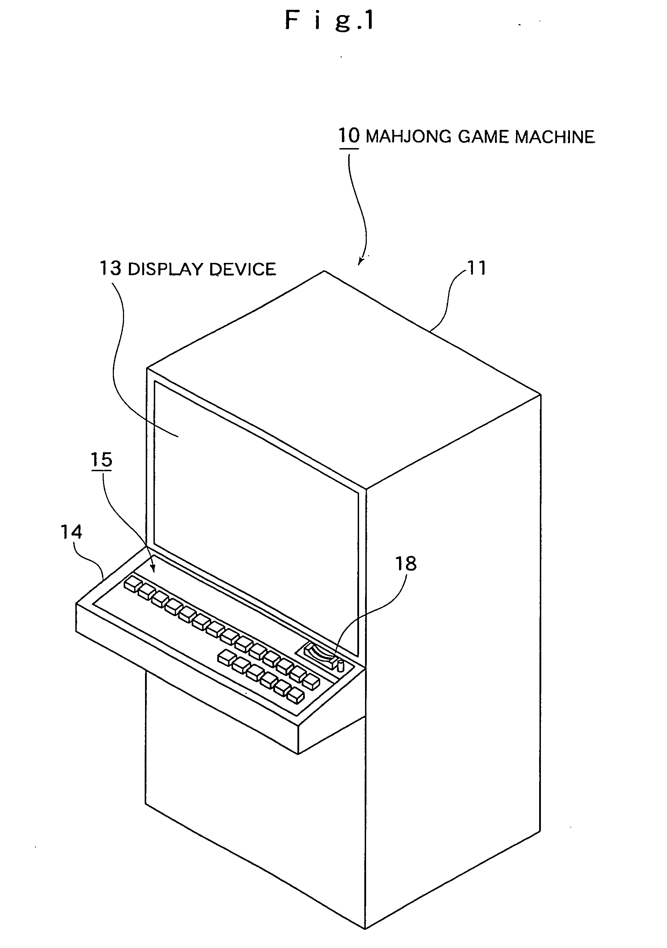

(1) A mahjong game machine (for example, a mahjong game machine 10) has a display device (for example, a display device 13) and provides a mahjong game in which a player plays a match against an opponent character, wherein the mahjong game machine comprises:
game control means which has a controller and proceeds the mahjong game in response to a control signal transmitted from the controller (for example, a manipulation part 15);
effect image data storing means which stores a plurality of effect image data for displaying an effect image based on a story;
set data storing means which stores a plurality of set data on the setting of game rules corresponding to the plurality of effect image data;
a selection image display device which displays the selection images which allow selecting the effect image data based on the controller;
an effect image display device which displays the effect images on the display device based on the selected effect image data when the selection images are displayed by the selection image display device; and
set means which performs the setting of the game rules based on the set data corresponding to the selected effect image data (see Fig. 1, Fig.3 and Fig. 4).

According to the invention described in (1), for example, in a match with one opponent character and a match with another opponent character, a player can play the mahj ong game under different game rules and hence, the player can play the game in a mode that he or she works out ideas in drawing or discarding tiles each time the game rules are changed whereby the strategy of the game can be enhanced. Asaresult, it is possible to provide themahjong gamemachine which enables the player to sufficiently enjoy an original interest or fun of the mahjong game and also enables the player to enjoy the mahjong game without becoming bored.

Further, according to one aspect of the present invention, the following is provided.

(2) In the mahjong game machine described in the above-mentioned (1), the selection image display device displays the selection images in response to the finishing of the match between the player and the opponent character.

According to the invention described in (2), the selection images are displayed when the match between the player and the opponent character is finished and hence, the player can select the setting of the game rules whereby he or she can further devote himself/herself to the match between the player and the opponent character.

Further, the present invention provides the following.

(3) In the mahjong game machine described in the above-mentioned (1), the selection image display device displays the selection images on the display device in response to the finishing of the match between the player and the opponent character with a result that the player wins.

According to the invention described in (3), the selection images are displayed when the match between the player and the opponent character is finished with a result that the player obtains the victor and hence, the player can select the setting of the game rules whereby the he or she can further devote himself/herself to the match with the opponent character.

Further, the present invention provides the following.

(4) A mahjong game control program for controlling a mahjong game machine which includes a display device and provides a mahjong game in which a player plays against an opponent character, wherein the mahj ong game control program comprises the steps of:
proceeding the mahjong game in response to a control signal transmitted from a controller;
storing a plurality of effect image data for displaying an effect image based on a story;
storing a plurality of set data on the setting of game rules corresponding to the plurality of effect image data;
storing image data for displaying selection images which enable the selection of the effect image data by the controller;
displaying the effect images on the display device based on the selected effect image data when the selection images are displayed in the selection image display step; and
setting the game rules based on the set data corresponding to the selected effect image data.

According to the invention described in (4), for example, in a match with one opponent character and a match with another opponent character, a player can play the mahj ong game under different game rules and hence, the player can play the game in a mode that he or she works out ideas in drawing or discarding tiles in hand each time the game rules are changed whereby the strategy of the game can be enhanced. As a result, it is possible to provide the mahj ong game machine which enables the player to sufficiently enjoy an original interest or fun of the mahjong game and also enables the player to enjoy the mahjong game without becoming bored.

Further, according to one aspect of the present invention, the following is provided.

(5) In the mahjong game control program described in the above-mentioned (4), the selection image display step displays the selection images on the display device in response to the finishing of the match between the player and the opponent character.

According to the invention described in (5), the selection images are displayed when the match between the player and the opponent character is finished and hence, the player can select the setting of game rules whereby the player can further devote himself/herself to the match between the player and the opponent character.

Further, the present invention provides the following.

(6) In the mahjong game control program described in the above-mentioned (4), the selection image display step displays the selection images on the display device in response to the finishing of the match between the player and the opponent character with a result that the player wins.

According to the invention described in (6), the selection images are displayed when the match between the player and the opponent character is finished with a result that the player wins and hence, the player can select the setting of game rules whereby the player can further devote himself/herself to the match between the player and the opponent character.

According to the constitutions of the present inventions, for example, in a match with one opponent character and a match with another opponent character, a player can play the mahjong game under different game rules and hence, the player can play the game in a mode that he or she works out ideas in advancing the game each time the game rules are changed whereby the strategy of the game can be enhanced. As a result, it is possible to provide the mahjong game machine which enables the player to sufficiently enjoy an original interest or fun of the mahjong game and also enables the player to enjoy the mahjong game without becoming bored.

### BRIEF DESCRIPTION OF THE DRAWINGS

Fig. 1 is a perspective view schematically showing one example of a mahjong game machine according to an embodiment of the present invention;
Fig. 2 is a plan view schematically showing a manipulation panel 14 which is provided to a mahjong game machine shown in Fig. 1 includes;
Fig. 3 is a block diagram schematically showing the inner constitution of the mahjong game machine shown in Fig. 1;
Fig. 4 is a view showing one example of a table of set data which is referenced at the time of setting game rules;
Fig. 5 is a flow chart showing a subroutine executed in the mahjong game machine shown in Fig. 1;
Fig. 6A to Fig. 6C are views schematically showing one example of the image displayed in the display device of the mahjong game machine shown in Fig. 1;
Fig. 7A to Fig. 7D are views schematically showing one example of images displayed on a display device of the mahjong game machine shown in Fig. 1;
Fig. 8 is a front view schematically showing a mobile phone according to the second embodiment; and
Fig. 9 is a block diagram schematically showing the inner structure of the mobile phone shown in Fig. 8.

### DESCRIPTION OF THE PREFERRED EMBODIMENTS

### [First embodiment]

One embodiment of the present invention is explained in conjunction with drawings.

Fig. 1 is a perspective view schematically showing one example of a mahjong game machine according to the first embodiment. Although the mahj ong game machine shown in Fig. 1 is a game machine for business use which is installed in a so-called game center, the mahjong game machine of the present invention also includes game machines such as a game machine for family use, a portable game machine and the like, for example, besides the above-mentioned game machine for business use.

The mahjong game machine 10 includes a vertically elongated box-like housing 11 and a display device 13 which constitutes the above-mentioned display device and is formed on an upper side of the housing 11. On the display device 13, an image which shows 13 to 14 tiles which are tiles in hand of a player, an image which shows discarded tiles of the player, an image which shows tiles in hand of an opponent character in a mode that the back side of the tiles is displayed, an image which shows discarded tiles of the opponent character and the like are displayed. Further, on the display device 13, an image of a hero which the player manipulates, an image of the opponent character and the like are displayed.

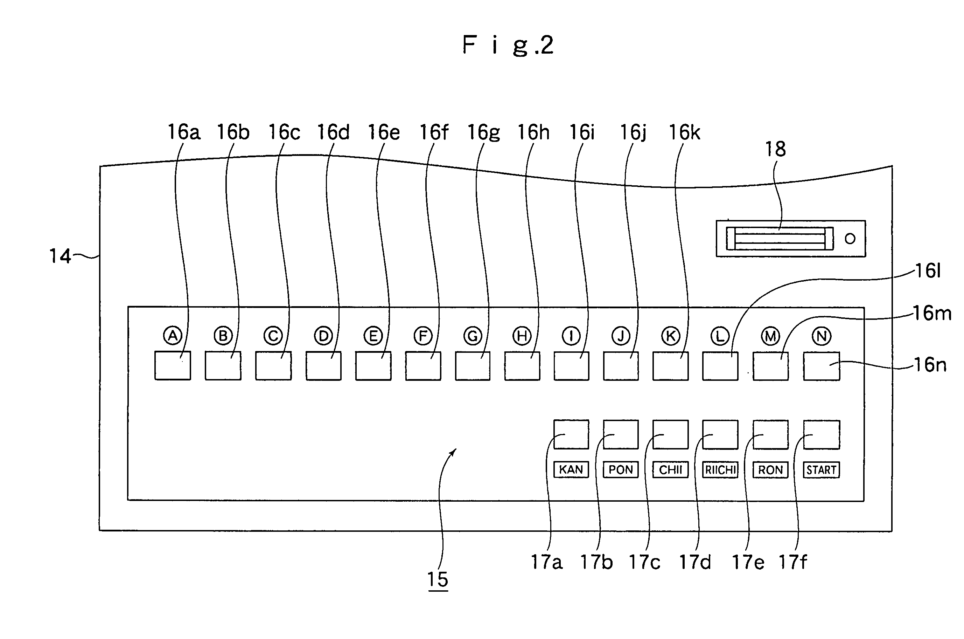

At a lower side of the display device 13, a manipulation panel 14 which includes a manipulation part 15 constituting the above-mentioned the controller is provided in a state that the manipulation panel 14 projects frontwardly. The manipulation part 15 includes fourteen controlling buttons provided at depths of the manipulation panel 14 and six controlling buttons provided in front of fourteen controlling buttons. The player can perform various kinds of manipulations relevant to the mahjong game by pressing the controlling buttons on the manipulation part 15. Here, the manipulation part 15 is explained in detail in conjunction with the drawing (Fig. 2) later. Further, a coin insertion slot 18 in which a coin necessary for starting the mahjong game is inserted is formed on the right end of the depths of the manipulation panel 14.

Fig. 2 is a plan view which schematically shows the manipulation panel 14 of the mahjong game machine 10.

As shown in Fig. 2, the manipulation part 15 of the manipulation panel 14 includes fourteen controlling buttons 16 (16a to 16n) which are provided on the upper side (the depth side in Fig. 1) of the manipulation panel 14 and six controlling buttons 17 (17a to 17f) which are provided at the lower side (the front side in Fig. 1) of the manipulation panel 14. Further, the coin insertion slot 18 is formed on the right side and above the fourteen controlling buttons 16.

Fourteen controlling buttons 16 (16a to 16n) respectively correspond to fourteen tiles which constitute the tiles in hand of the player displayed on the display device 13. In a state that the number of the tiles in hand of the player is 13, when the controlling button 16n is pushed downwardly, a tile drawing operation is performed and a new tile is displayed at the right end (a position corresponding to the controlling button 16n) of thirteen tiles displayed on the display device 13 and hence, the number of tiles in hand of the player becomes 14. Then, among fourteen tiles which constitute the tiles in hand of the player, when the player selects an unnecessary tile and pushes down the controlling button 16 corresponding to the unnecessary tile, the tile discarding operation is performed so that the unnecessary tile is eliminated from the tile in hand of the player and the number of tiles in hand of the player becomes thirteen. At the same time, in a portion of the display device 13 where the discarded tiles are displayed, the discarded tile which is thrown away as the unnecessary tile is newly displayed.

Among six controlling buttons 17 (17a to 17f), the controlling buttons 17a to 17e respectively correspond to the mahjong actions 'kan', 'pon', 'chii', 'riichi' 'ron' in the ordinary mahjong. Further, the controlling button 17 f is a button which is pushed downwardly to start the mahj ong game after insertion of the coin into the coin insertion slot 18.

Bymanipulatingtheabove-mentionedmanipulationpart 15 consisting of the controlling buttons 16a to 16n and the controlling buttons 17a to 17f, the change of tiles in hand of the player is sequentially performed. On the other hand, the opponent character also performs the substantially equal actions. However, these actions are performed based on an automatic control of a control processing unit (CPU) and, naturally, the tiles of the opponent character are displayed in a mode where only the back side of the tiles in hand is displayed and the player can watch only the front side of the discarded tiles of the opponent character.

Then, the tile drawing action and the tile discarding action by the player and the opponent character are alternately repeated, wherein the actions such as 'pon', 'chii' are inserted in the tile drawing action and the tile discarding action in some cases. When the tiles in hand of the player becomes the combination corresponding to any one of a plurality of accomplished 'yaku' (for example, 'pinfu', 'tanyao' or the like), the player gets 'hora' (winning) and the player can acquire points corresponding to the accomplished 'yaku' which brought 'hora' from the opponent character.

On the other hand, when the opponent character wins by 'hora', the opponent character acquires points corresponding to the accomplished 'yaku' and the points of the player is decreased. In this embodiment, the change of the tiles in hand of the player is sequentially performed by pressing the controlling buttons. However, the mahjong game of the present invention may be configured such that a display corresponding to the controlling buttons is made on a screen of the display device and the above-mentioned manipulation is performed by clicking the corresponding portion. The mahjong game of the present invention may be also configured such that by clicking the portion where the tiles in hand are displayed, the above-mentioned manipulation is performed.

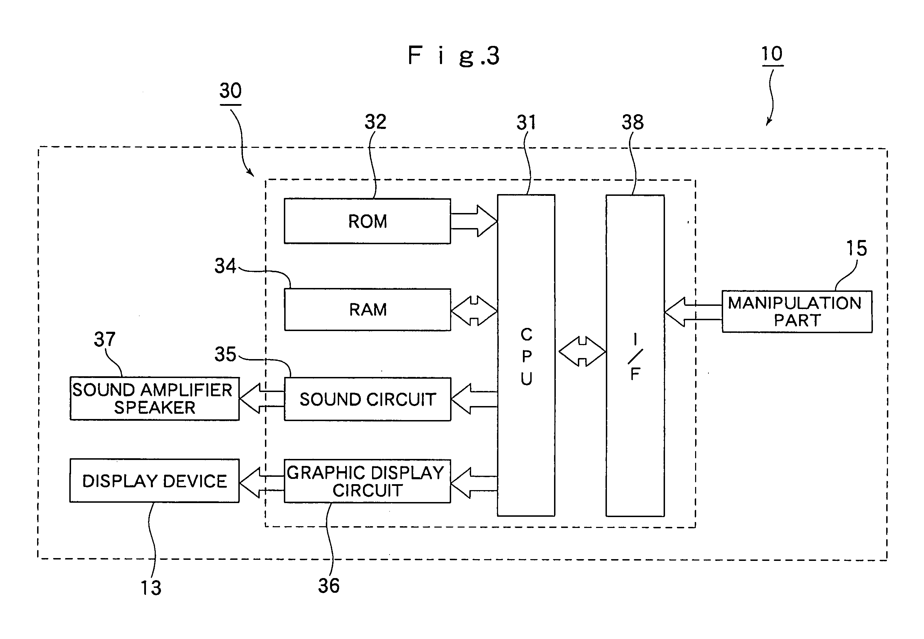

Fig. 3 is a block diagram schematically showing the inner structure of the mahjong game machine 10.

As shown in Fig. 3, in the inside of the housing 11 of the mahjong game machine 10, a control processing unit 30 is provided. The control processing unit 30 includes a CPU (central processing unit) 31, a ROM (read only memory) 32 and a RAM (random access memory) 34.

Further, the CPU 31 is connected with the manipulation part 15 via the interface circuit (1/F) 38. The CPU 31 performs various processing in response to control signals transmitted from the manipulation part 15 and advances the mahjong game.

In the ROM 32, various kinds of image data including image data of respective tiles and the opponent character displayed on the display device 13, a game machine control program which controls the flow of the whole mahjong game and the like are stored. Further, in the ROM 32, opening effect image data which constitutes the above-mentioned effect image data is stored in plural numbers. The opening effect image data are image data for displaying the opening effect image with story when the opponent character which plays the match is selected at the time of starting the game. The opening effect images are explained later.

Further, in the ROM32, the story effect image data which constitutes the above-mentioned effect image data is stored in plural numbers respectively for respective opponent characters. The story effect image data are the image data for displaying the story effect image with story when the game is finished with a result that the player wins against the opponent character. The story effect images are explained later. Here, ROM 32 functions as effect image data storing means which stores the opening effect image data and the story effect image data which constitute the effect image data.

Further, in the ROM 32, character selection image data which constitute the above-mentioned selection image data are stored in plural numbers. When the character selection images based on the above-mentioned selection image data are displayed on the display device 13, it is possible for the player to select the desired opponent character out of the plurality of opponent characters.

Further, in the ROM 32, story selection image data which constitute the above-mentioned selection image data are stored in plural numbers. When the story selection images based on the above-mentioned story selection image data are displayed on the display device 13, it is possible for the player to select the desired story effect image out of the plurality of story effect images.

Here, the ROM 32 functions as selection image data storing means which stores the character selection image data and the story selection image data which constitute the selection image data.

Further, in the ROM 32, a plurality of set data is stored such that these set data respectively correspond to the plurality of story effect image data. These set data are data for setting game rules. The setting of the game rules is explained later. Here, the ROM 32 functions as set data storing means which stores the plurality of set data.

Still further, in the ROM 32, notification image data for displaying a notification image is stored. The notification image is an image for notifying that, in a state that the story selection image is displayed, when the story effect image which is identical with the story effect image displayed before is selected, the duplicate selection is made.

Here, in the ROM 32, a plurality of sound data for generating various kinds of sounds in conformity with the display of various kinds of images based on the above-mentioned opening effect image data, story effect image data, character selection image data, story selection image data, and notification image data are stored.

The above-mentioned sound data is not particularly limited and may be human sound data formed of a talking voice, a shouting voice, a surprising voice or the like or data such as music or the combination of these sounds. Further, the image of the opponent character may be displayed in full length or a portion such as a face of the opponent character may be displayed.

The various kinds of images may be animated or still images.

In the RAM 34, the display information is stored. The display information is information on the story effect image data related to the story effect image displayed on the display device 13 and includes kinds of story effect image data relevant to the story effect image displayed on the display device 13 and the time and date at which the story effect image is displayed. The display information is referred to when determining whether or not the story effect image, which has been displayed during the display of the story selection image, is identical with the previously displayed one. Here, the RAM 34 functions as display information storing means which stores the display information.

A sound circuit 35 is connected with a sound amplifier 37 which outputs various kinds of sounds corresponding to the progress state of the mahjong game. A graphic display circuit 34 displays the image selected in response to a control signal transmitted from the CPU31.

Next, as for one example of the mahjong game performed using the mahjong game machine 10, the game content is explained.

### (A) Summary of the mahjong game and processing at the time of starting the game

The mahjong game offered by the mahjong game machine 10 is a mahjong game in which out of a plurality of opponent characters, one opponent character is selected, and through a mahjong match between a hero on the game whom the player manipulates and the selected opponent character, the favorable impression of the hero that the opponent character has is deepened. Here, the opponent character who appears in the mahjong game is a lady.

First of all, the player inputs an entry name formed of a row of letters by manipulating the manipulation part 15. The entry name becomes a name of the hero on the game and, when an image showing speech of the opponent character (speech bubble) in the story effect image is displayed, the opponent character calls the name of the hero by the entry name. Further, the entry name is stored in the RAM 34 and, at the same time, the above-mentioned display information is stored in a state that the display information is made relevant to the entry name.

Next, the player selects the opponent character against whom the player plays out of a plurality of opponent characters by manipulating the manipulation part 15. When the opponent character is selected, the opening effect image related to the selected opponent character is displayed. When the opening effect image is displayed, the image which shows the appearance, the profile or the like of the opponent character is displayed on the display device 13. Here, it may be possible that a plurality of opening effect image data related to the opponent characters are stored in the ROM 32 and when the opponent character against whom the player plays is selected out of the plurality of opponent characters, the image which enables the selection of one opening effect image data out of the plurality of opening effect image data is displayed.

### (B) Match with the opponent character

When the opponent character is selected by the manipulation of manipulating part 15, the player performs the mahjong game with the opponent character and when the game is finished with a result that the player wins the game against the opponent character, the desired story effect image can be selected out of the plurality of story effect images. Here, the match with the opponent character is performed three times.

The player and the opponent character respectively hold given points (for example, 10,000 points) at the time of starting the match and the player wins the game when the points of the opponent character become 0 point or when the player gets 'hora' three times. On the other hand, when the points of the player become 0 point as the opponent character gets 'hora' or the like, the game is over.

### (C) Selection of story effect image

When the player plays the match with the opponent character and the game is finished with a result that the player wins against the opponent character, the player can select the desired story effect image out of the plurality of story effect images. When this story effect image is displayed, a mode in which the opponent character speaks various words to the hero is displayed on the display device 13.

As described above, the match with the opponent character is performed three times, wherein the story effect image that the player can select differs among the first match, the second match and the third match.

### (D) Setting of game rules

When the game is finished with a result that the player wins the match against the opponent character, in the match which is performed next time, the points of the player and the opponent character when the match is started and the game rules in the mahjong game such as the presence or non-presence of 'kuitanatozuke', 'iihan shibari', 'ryanhan shibari' and the like are set. The setting of the game rule is made corresponding to the story effect image which is selected after the game is finished with a result that the player wins the match against the opponent character out of the plurality of determination data stored in the ROM 32. Since the setting of game rule is made every time that the player wins the match against the opponent character, the player can perform the mahjong game with the game rule which differs every match.

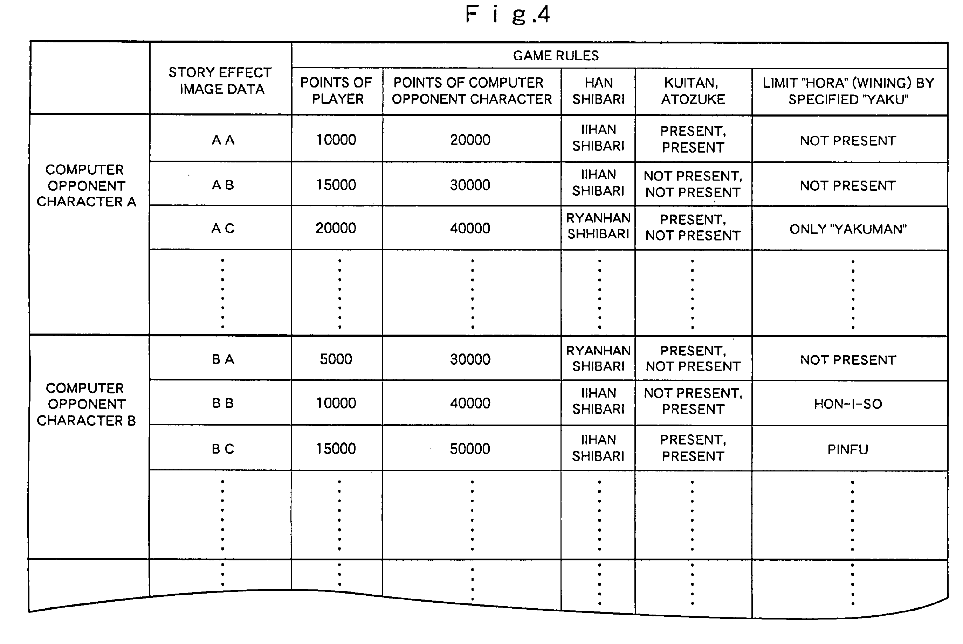

Fig. 4 is a view showing one example of a table of set data which is referenced at the time of setting the game rules.

The table is referenced at the time of determining one set data for setting the game rules out of a plurality of set data based on the selected story effect image data.

In Fig. 4, there are shown the game rules which are set corresponding to respective story effect image data which can be selected when the game is finished with a result that the player wins the game against the opponent character A.

Among items of the game rules, from the left side of the table, "points of player", "points of opponent character", "han shibari", "kuitan atozuke" and "limitation of hora to specified yaku" are listed. The "points of player" and the "points of opponent character" are points which the player and the opponent character respectively possess when the match game is started.

Further, "han shibari" is the game rule to limit the sum of number of "hans" to achieve the accomplished "yaku" when the game is finishedwith "hora" (winning) . For example, assuming that the game rule is set to "ryanhan shibari", when the number of "hans" of the accomplished "yaku" is less than two hans, the player cannot achieve the "hora".

Further, the game rule "kuitan atozuke" is provided to set the presence or non-presence of so-called "kuitan atozuke" in mahjong as a rule.

Still further, the game rule "limitation of "hora" to specified "yaku"" is to limit the kinds of "yaku" with which the player can achieve "hora". For example, when game rules are limited only to "yakuman", the player can achieve "hora" only with "yakuman" and cannot achieve "hora" with other accomplished "yaku".

In Fig. 4, for example, the game is finished with a result that the player wins the match against the opponent character A and the player selects the story effect image data A, the game rules of the next game becomes as follows. That is, the points of the player when the game is started becomes 20000 points and the points of the opponent character when the game is started become 40000 points, "ryanhan shibari" and "kuitan" are present, "atozuke" is not present, and there is no limitation with respect to "yaku" to accomplish "hora".

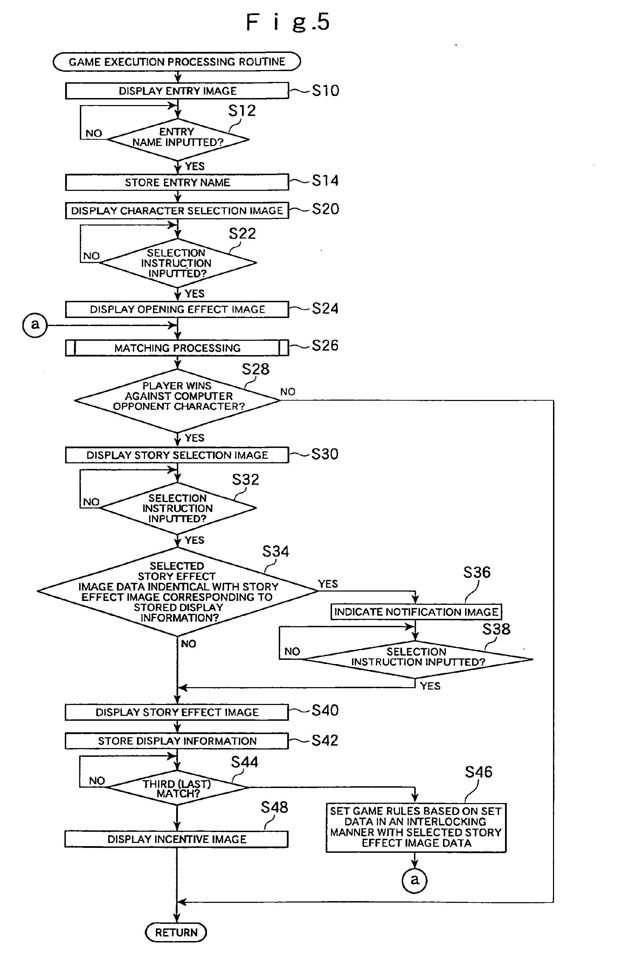

Fig. 5 is a flowchart showing a subroutine executed in the mahjong game machine 10. This subroutine is a subroutine which is read out from the mahjong game machine control program which controls the mahj ong game of the mahj ong game machine 10 which is preliminarily executed and is executed when a given coin is inserted into the coin inserting slot 18 by the player and the controlling button 17f of the manipulation part 15 is pushed downwardly.

First of all, the CPU 31 displays the entry image on the display device 13 (step S10). When the entry image is displayed, the player can input the above-mentioned entry name by manipulating the manipulating part 15.

Next, the CPU 31 determines whether entry name is inputted or not (step S12) . That is, the CPU 31 determines whether the entry name is inputted or not due to the manipulation of the manipulation part 15.

When it is determined that the entry name is not inputted in step S12, the CPU 31 returns the processing to step S12. On the other hand, when it is determined that the entry name is inputted, as the next step, the CPU 31 stores the inputted entry name in the RAM 34 (step S14).

Next, the CPU 31 displays the character selection image (step S20). That is, the CPU 31 displays the character selection image based on the character selection image data stored in the ROM 32. When the processing of step S31 is executed, the player can select a desired opponent character from a plurality of (for example, five) opponent characters.

When the processing of step S20 is executed, as the next step, the CPU 31 determines whether the selection instruction of the opponent character is issued or not (step S22). That is, the CPU 31 determines, in a state that the character selection image is displayed, whether the instruction to select one opponent character is inputted or not out of the plurality of opponent characters by way of the manipulation part 15. In step S22, when it is determined that the selection instruction of the opponent character is not inputted, the CPU 31 returns the processing to step S22.

On the other hand, in step S22, when it is determined that the selection instruction of the opponent character is inputted, the CPU 31 displays the opening effect image (step S14). That is, the CPU 31 displays the opening effect image based on the opening effect image data stored in the ROM 32. When the processing of step S14 is executed and the opening effect image is displayed on the display device 13, the image indicative of the appearance, the profile and the like of the opponent character which is selected when the character selection image is displayed in step S20 is displayed.

Next, the CPU 31 performs the processing relevant to the match with the opponent character (step S26).

When the processing of step S26 is executed, the mahjong game advances in the above-mentioned steps. That is, the plays each of which starts from a point of time that thirteen or fourteen tiles which become the initial tiles in hand of the player are delivered (delivering of tiles) to a point of time that it is confirmed that either the player or the opponent character gets 'hora' or both of them cannot get 'hora' (the play becomes invalid) are repeated until the points of the player become 0 point or the points of the opponent character become 0 or the player gets 'hora' three times.

When the processing of step S26 is executed, as the next step, the CPU 31 determines whether the player wins the match against the opponent character or not (step S28) . In step S28, when the CPU 31 determines that the player fails to win the match against the opponent character, this subroutine is finished. This implies that the player becomes the loser and the game is over.

On the other hand, in step S29, when the CPU 31 determines that the player wins the match against the opponent character, as the next step, the CPU 31 displays the story selection image (step S30). That is, the CPU 31 displays the story selection images based on the story selection image data stored in the ROM 32. When the processing of step S30 is executed, the player can select one story effect image data out of the plurality of story effect image data.

When the processing of step S30 is executed, as the next step, the CPU 31 determines whether the selection instruction of the story effect image data is performed or not (step S32). That is, when the story selection image is displayed in step S30, the CPU 31 determines whether the instruction for selecting one story effect image data out of the plurality of story effect image data by way of the manipulation part 15 is inputted or not.

In step S32, when the CPU 31 determines that there is no instruction for selecting the story effect image data, the CPU 31 returns the processing to step S32.

On the other hand, in step S32, when the CPU 31 determines that the instruction for selecting the story effect image data is made, as the next step, the CPU 31 determines whether the story effect image data which is determined to be selected in step S32 is identical with the story effect image data according to the display information stored in the RAM 34 or not (step S34). Here, in step S34, the state that the selected story effect image data is identical with the story effect image data corresponding to the display information stored in the RAM 34 implies that the player corresponding to the entry name has already selected the above-mentioned selected story effect image data before and the story effect image based on the story effect image data has been displayed in the display device 13.

In step S34, when the CPU 31 determines that the selected story effect image data is identical with the story effect image data corresponding to the display information stored in the RAM 34, as the next step, the CPU 31 displays the notification image (step S36). That is, the CPU 31 displays the notification image based on the notification image data stored in the ROM 32. When the processing of this step S36 is executed, the image which notifies that the story effect image which is identical with the story effect image which has been displayed before is selected is displayed on the display device 13.

When the processing of step S36 is executed, as the next step, the CPU 31 determines whether the instruction for selecting the story effect image data is made or not (step S38). When the CPU 31 determines that there is no instruction for selecting the story selection image data in step S38, the CPU 31 returns the processing to step S38.

When the CPU 31 determines that the instruction for selecting the story effect image data is made in step S38 or when the CPU 31 determines that the selected story effect image data is not identical with the story effect image data corresponding to the display information stored in the RAM 34 in step S34, as the next step, the CPU 31 displays the story effect image data (step S40). That is, the CPU 31 displays the story effect image based on the story effect image data selected in step S32 or step S38 . When this story effect image is displayed, a mode in which the opponent character speaks various words to the hero or the like is displayed on the display device 13.

When the processing of step S40 is executed, as the next step, the CPU 31 stores the display information in the RAM 34 (step S42). As described above, this display information is information relevant to the story effect image data corresponding to the story effect image displayed in step S40 and also is information which is referenced in the processing of the above-mentioned step S34.

When the processing of step S42 is executed, as the next step, the CPU 31 determines whether the match with the opponent character which is performed in the above-mentioned step S26 is the third (last) match or not (step S44).

In step S44, when it is determined that the match performed in step S26 is not the third match (that is, the match being the first or the second match) , as the next step, the CPU 31 performs the processing for setting the game rules based on one set data out of a plurality of set data stored in the ROM 32 in an interlocking manner with the story effect image data selected in step S32 (step S46). That is, the CPU 31, by reference to the table shown in Fig. 4 and the like, determines one set data based on the story effect image data selected in step S32 and sets the determined one set data out of the plurality of set data stored in the ROM 32 in the RAM 34. By executing the processing in step S46, in the next match, the match with the opponent character is performed using the set game rule.

For example, in the above-mentioned step S30, in a state that the story selection image which allows the selection of one story effect image data out of two story effect image data AA, AB (see Fig. 4) is displayed, when the story effect image data AA is selected, the above-mentioned game rules are set to "initial points of the player are 10, 000 points" and "initial points of the opponent character are 20,000 points", "kuitan ari, atozuke ari", "iihan shibari" and "no limitation to "hora" with specified "yaku"). On the other hand, when another story effect image data AB is selected, the above-mentioned game rules are set to "initial points of the player are 15, 000 points", "the initial points of the opponent character are 30, 000 points", "kuitan nashi, atozuke nasi", "iihan shibari" and "no limitation to "hora" with specified "yaku").

When the processing of step S46 is executed, the CPU 31 returns the processing to step S26 and hence, the match with the opponent character is performed again.

Here, the first match with the opponent character, the second match with the opponent character and the third match with the opponent character differ from each other with respect to the story selection image to be displayed and the story effect image data which can be selected when the story selection image is displayed.

In the above-mentioned step S44, when the CPU 31 determines that the match with the opponent character is the third match, the CPU 31 displays an incentive image (step S48). This incentive image is an image which stimulates the player to enhance his or her desire to play the mahjong game again with the mahjong game machine 10. For example, when the user plays the mahjong game next time using the mahjong game machine, an image which shows that the number of opponent characters with whom the user can play a match is increased from 5 persons to 6 persons by adding one person is displayed. By executing the processing of step S48, this subroutine is finished.

Here, in performing the processing of step S20 of the subroutine shown in Fig. 5, the CPU 31 and the ROM 32, upon receiving a signal indicative of the starting of the mahjong game, function as the selection image display device which allows the display device 13 to display the character selection image which enables the selection of the opening effect image data. Further, in executing the processing of step S30 of the subroutine shown in Fig. 5, the CPU 31 and the ROM 32, upon receiving a signal that the game is finished with a result that the player wins the match against the opponent character, function as the selection image display device which displays the story selection image which enables the selection of the story effect image data.

Further, in executing the processing of step S24 of the subroutine shown in Fig. 5, when the character selection image is displayed on the display device 13, the CPU 31 and the ROM 32 function as the effect image display device which displays the opening effect image based on the selected opening effect image data. Further, in executing the processing of step S40 of the subroutine shown in Fig. 5, when the story selection image is displayed on the display device 13, the CPU 31 and the ROM 32 function as the effect image display device which displays the story effect image based on the selected story effect image data.

Further, in executing the processing of step 34 of the subroutine shown in Fig. 5, the CPU 31 and the ROM 32 function as determination means which determines whether the story effect image data which is selected when the story selection image is displayed and the story effect image data corresponding to the display information stored in the RAM 34 are identical with each other. Further, in executing the processing of step S36 of the subroutine shown in Fig. 5, the CPU 31 and the ROM 32 function as notification image display device which displays the notification image which notifies that the story effect image which is selected when the story selection image is displayed and the story effect image data corresponding to the display information stored in the RAM 34 are identical with each other.

Further, in executing the processing of step S46 of the subroutine shown in Fig. 5, the CPU 31 functions as means for setting game rules based on set data stored in the ROM 32 in an interlocking manner with the selected story effect image data.

Further, when the subroutine shown in Fig. 5 is executed, the control processing unit 30 functions as game control means which proceeds the mahjong game based on the control signals transmitted from the manipulation part 15.

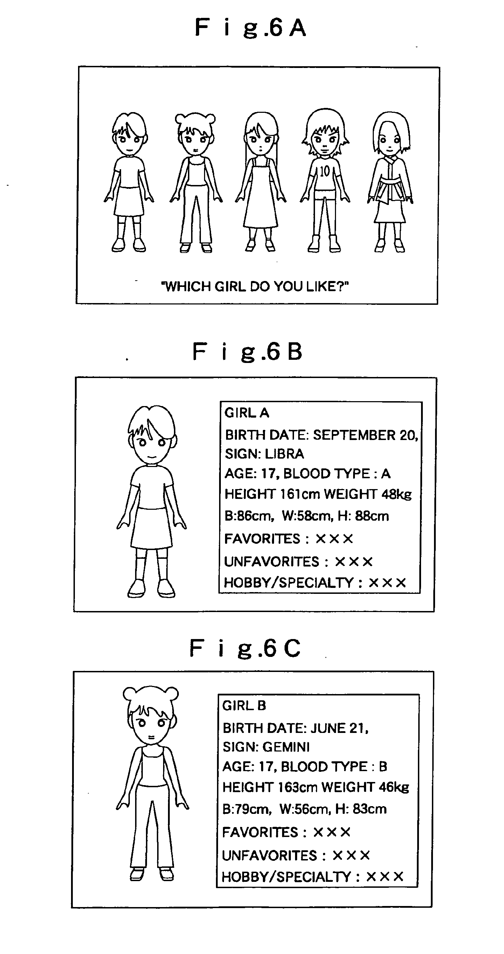

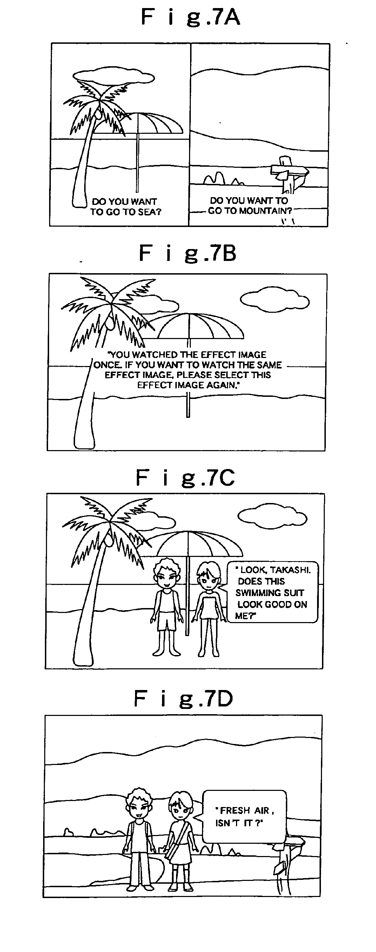

Next, images which are displayed on the display device 13 of the mahjong game machine 10 when the subroutine shown in Fig. 5 is executed are explained in conjunction with Fig. 6 and Fig. 7.

Fig. 6A to Fig. 6C and Fig. 7A to Fig. 7D are views which schematically show one example of the images displayed on the display device 13 of the mahjong game machine 10.

The screen image shown in Fig. 6A is the above-mentionedcharacterselectionimagewhichisdisplayed on the display device 13 in step 520 of the subroutine shown in Fig. 5.

In the screen image shown in Fig. 6A, an image which shows appearances of 5 opponent characters is displayed. At a lower side of the screen image, an image which asks the player to select the opponent character, that is, "Which girl do you like?" is displayed. During the period that the screen image shown in Fig. 6A is displayed, when the instruction to select the opponent character at the left end (opponent character A) out of 5 opponent characters is made, the screen image shown in Fig. 6B is displayed.

The screen image shown in Fig. 6B is the above-mentioned opening effect image which is displayed in the display device 13 in step S24 of the subroutine shown in Fig. 5.

On the left side with respect to the center of the screen image shown in Fig. 6B, an image which shows the appearance of the opponent character A which is selected during the period that the screen image shown in Fig. 6A is displayed is displayed. Further, on the right side with respect to the center of the screen image shown in Fig. 6B, an image which shows profiles such as name, birth date, height, weight, vital statistics, likes and dislikes, hobbies and the like of the opponent character A is displayed. After the screen image shown in Fig. 68 is displayed, as the opening effect image, an animated image which shows the manner in which the hero and the opponent character A have the conversation from a point of time that they come across each other to a point of time that a match of mahjong or the like starts is displayed.

During the period that the screen image shown in Fig. 6A is displayed, when the instruction to select the second opponent character from the left end (opponent character B) out of 5 opponent characters is made in response to the manipulation of the manipulation part 15 by the player, the screen image shown in Fig. 6C is displayed.

The screen image shown in Fig. 6C is the above-mentioned opening effect image displayed on the display device 13 in step S24 of the subroutine shown in Fig. 5.

On the left side with respect to the center of the image screen shown in Fig. 6C, an image which shows the appearance of the opponent character B which is selected during the period that the screen image shown in Fig. 6A is displayed is displayed. Further, on the right side with respect to the center of the screen image shown in Fig. 6C, an image which shows profiles such as name, birth date, height, weight, vital statistics, likes and dislikes, hobbies and the like of the opponent character B is displayed. After the screen image shown in Fig. 6C is displayed, as the opening effect image, an animated image or the like which shows the manner in which the hero and the opponent character B have the conversation from a point of time that they come across each other to a point of time that a match of mahjong starts is displayed.

As shown in Fig. 6A to Fig. 6C, in the mahjong game machine 10 according to the first embodiment, the player can positively select the opponent character by himself or herself and one of the opening effect images which have stories different from each other is displayed in accordance with the selection and hence, the hitherto unknown fun is added. Accordingly, the player can sufficiently enjoy the mahjong game without feeling bored.

A screen image shown in Fig. 7A is the above-mentioned story selection image displayed on the display device 13 in step S30 of the subroutine shown in Fig. 5.

On the left side with respect to the center of the screen image shown in Fig. 7A, a background image which shows a seashore is displayed and at the lower side of the background image, an image which shows one of choices of the story effect image data "Do you want to go to the sea?" is displayed. Further, on the right side with respect to the center of the screen image shown in Fig. 7A, a background image which shows a mountain or the like is displayed and at the lower side of the background image, an image which shows one of choices of the story effect image data "Do you want to go to the mountain?" is displayed.

During the period that the screen image shown in Fig. 7A is displayed, when the instruction to select either one of story effect image data out of 2 story effect image data is made by the manipulation of the manipulation part 15 and the selected story effect image data is identical with the story effect image data corresponding to the image information stored in the RAM 34, as the next step, a screen image shown in Fig. 7B is displayed.

The screen image shown in Fig. 7B is the above-mentioned notification image displayed on the display device 13 in step S36 of the subroutine shown in Fig. 5.

In the screen image shown in Fig. 7B, the background image which shows the seashore shown in Fig. 7A is displayed and, at the center of the screen image, an image which notifies that the selected story effect image is identical with the story effect image displayed before is displayed. That is, the image says "you watched the effect image once. If you want to watch the same effect image, please select this effect image again."

During the period that the screen image shown in Fig. 7A is displayed, when the instruction to select the story effect image data corresponding to the image which shows the one selection "Do you want to go to sea?" on the left side of the screen image out of two story effect image data is made by the manipulation of the manipulation part 15 and the selected story effect image data is different from the story effect image data corresponding to the display information stored in the RAM 34, as the next step, a screen image shown in Fig. 7C is displayed.

The screen image shown in Fig. 7C is the above-mentioned story effect image displayed on the display device 13 in step S40 of the subroutine shown in Fig. 5.

In the screen image shown in Fig. 7C, the background image which shows the seaside shown in Fig. 7A is displayed, wherein an image which shows the male hero is displayed on the left side of the screen image and an image which shows a female opponent character and an image (speech bubble image) which shows the dialogue "Look, Takashi. Does this swimming suit fit me fine?" which the opponent character says to the hero are displayed on the right side of the screen image. After the screen image shown in Fig. 7C is displayed, as the above-mentioned story effect image, an animated image in which the opponent character and the hero have various conversations further at the seashore so that they become more friendly each other is displayed.

During the period that the screen image shown in Fig. 7A is displayed, when the instruction to select the story effect image data corresponding to the image which shows the one selection "Do you want to go to the mountain?" on the right side of the screen image out of two story effect image data is made by the manipulation of the manipulation part 15 and the selected story effect image data is different from the story effect image data corresponding to the image information stored in the RAM 34, as the next step, an image display shown in Fig. 7D is displayed.

The screen image shown in Fig. 7D is the above-mentioned story effect image displayed on the display device 13 in step S40 of the subroutine shown in Fig. 5.

In the screen image shown in Fig. 7D, the background image which shows the mountains or the like shown in Fig. 7A is displayed, wherein an image which shows the male hero is displayed on the left side of the screen image and an image which shows a female opponent character and an image (speech bubble image) which shows the dialogue "The air is fresh, isn't it, Takashi?" which the opponent character speaks to the hero are displayed on the right side of the screen image. After the screen image shown in Fig. 7D is displayed, as the above-mentioned story effect image, an animated image in which the opponent character and the hero have various conversations further in the mountain so that they become more friendly each other is displayed.

As has been explained in conjunction with Fig. 1 to Fig. 7, in the mahjong game machine 10 according to the first embodiment, each time the match is finished with the result that the player wins the game against the opponent character, in a next match, the player can play the mahjong game under different game rules and hence, the player can play the game in a mode that he or she works out ideas in drawing or discarding tiles in hand each time the game rules are changed whereby the strategy of the game can be enhanced. As a result, it is possible to provide the mahjong game machine which enables the player to sufficiently enjoy an original interest or fun of the mahjong game and also enables the player to enjoy the mahjong game without becoming bored.

Further, each time the match is finished with the result that the player wins the game against the opponent character, the selection image is displayed and the player can select the effect image and hence, in response to the selection by the player, the effect images having differing stories are respectively displayed. As a result, the player can select the desired effect image data and hence, the conventionally unknown and novel fun that the development of the story is changed one after another by the selection of the player is added to the game whereby the player can sufficiently enjoy the mahjong game without becoming bored.

Further, when the story effect image which is displayed before is selected, this selection is notified by the notification image and hence, the duplicate display of the effect image can be prevented whereby the player can enjoy the different story developments every time he or she plays the mahjong game. As a result, the player can further enjoy the mahjong game without becoming bored.

The present invention may be configured such that the information on the game rules to be set are displayed along with the above-mentioned display of the selection image. Due to such a constitution, a novel interest or fun that the game rules to be set can be selected besides the selection of the effect image data can be added whereby the player can further enjoy the mahjong.

In the first embodiment, the explanation is made with respect to the case in which the game rules are limited to the points of the player at the time of starting the game, the points of the opponent character at the time of starting the game, the presence or the non-presence of "han shibari" "kuitan" and "atozuke", the limitation of "hora" to specific "yaku". However, the above-mentioned game rules are not limited to these rules and various rules used in the usual mahjong are applicable to the present invention.

The mahjong game according to the first embodiment may be constituted such that in a state that the story effect image is wholly displayed with respect to one opponent character and the display information on the displayed story effect image is stored, when the above-mentioned one opponent character is selected in the character selection image, a notification image that all story effect image is displayed is displayed. Due to such constitution, the player can prevent the story effect image according to the opponent character displayed on the whole story effect image from being displayed in a duplicate manner.

In the mahjong game according to the first embodiment, the explanation is made with respect to the case in which when the selected story effect image data is identical with the stored story effect image data according to the display information, the notification image is displayed and, thereafter, when the same story effect image data is selected, this story effect image data is displayed. In the present invention, however, the mahjong game machine may be constituted such that, for example, when the effect image data which is identical with the effect image data according to the stored display information is selected for the first time as well as the second time, the notification image is displayed and, at the same time, when the effect image data according to the stored display information is selected for the third time, the selected effect image is displayed. Still further, the mahjong game machine may be constituted such that the notification image is displayed every time the effect image data is selected but the selected rendition is not displayed. Further, the mahjong game machine may be constituted such that when the identical effect image data is selected, the selected effect image is not displayed while preventing the display of the notification image. Further, the mahjong game machine may be constituted such that the identical effect image data cannot be selected.

Further, in the mahjong game machine according to the first embodiment, the explanation is made with respect to the case in which the player wins the game when the points of the opponent character become 0 or the player achieves accomplishments "hora" three times. However, in this embodiment, the condition which allows the player to win the game against the opponent character is not particularly limited. That is, the conditions besides the above-mentioned condition, for example, the accomplishment "hora" which is obtained by the accomplishment of specific "yaku" or the continuous achievement of the accomplishment "hora" a specific number of times or the like may be used.

In the first embodiment, the explanation is made with respect to the case in which the character selection image is displayed when the mahjong game is started or the story selection image is displayed when the game is finished with the result that the player wins the game against the opponent character. However, in this embodiment, the condition for displaying the selection image is not particularly limited and, for example, the selection image may be displayed when the player achieves the accomplishment "hora", the points of the player reach a given number of points (for example, 30, 000 points) or when the player achieves the accomplishment "hora" with the specific accomplished "yaku".

### [Second embodiment]

The second embodiment described hereinafter is directed to a case in which the mahjong game machine of the present invention is applied to a mobile phone and the game machine control program of the present invention is stored in the mobile phone.

The processing in the mobile phone according to the second embodiment is substantially equal to the processing in the subroutine shown in Fig. 5 and hence, the explanation is made with respect to the mobile phone in this embodiment.

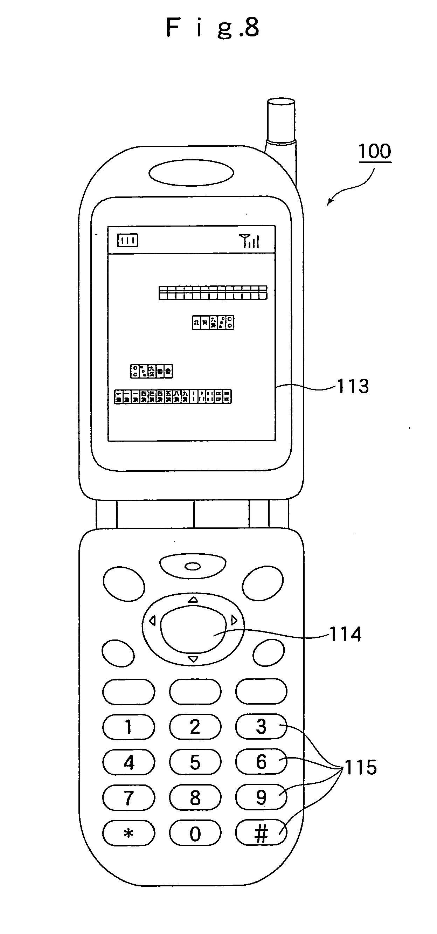

Fig. 8 is a front view which schematically shows the mobile phone according to the second embodiment.

On a display device 113 provided to a mobile phone 100, an image which shows thirteen to fourteen tiles which are tiles in hand of the player, an image which shows discarded tiles of the player, an image which shows tiles in hand of the opponent character which are in a mode that only the back side of the tiles is displayed, an image which shows discarded tiles of the opponent character and the like are displayed. Further, on the display device 113, an image which shows the hero who plays the mahjong game, an image which shows the opponent character and the like are displayed.

Further, the mobile phone 100 includes a controlling button 114 and twelve controlling buttons 115 which constitute the controller. The player selects an unnecessary tile from the tiles in hand of the player by pressing the controlling buttons 114, 115, for example, and further, performs a tile drawing operation and a tile discarding operation and the like by further pressing the controlling buttons 114, 115 thus progressing through the mahjong game.

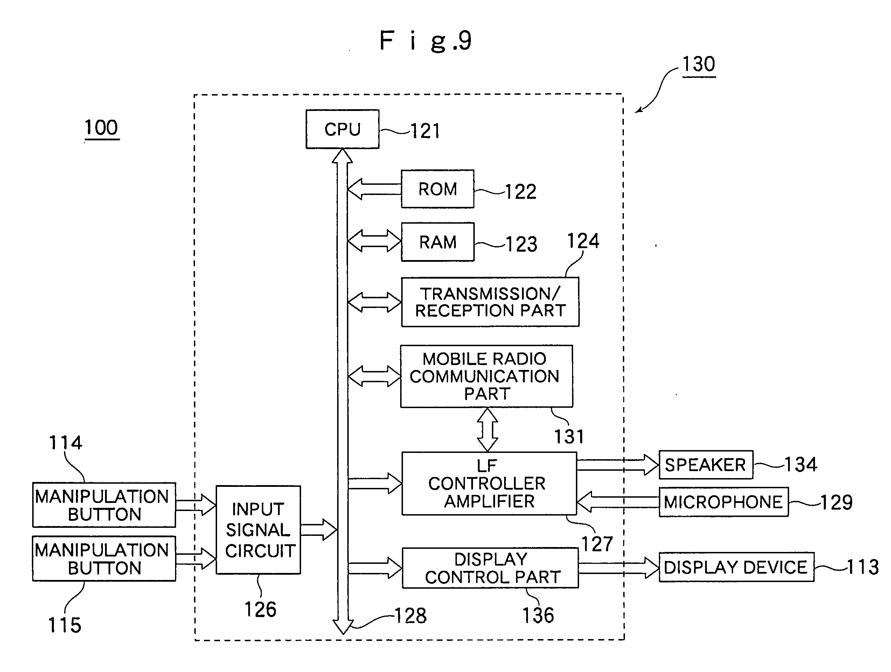

Fig. 9 is a block diagram which schematically shows one example of the constitution of the mobile phone 100 shown in Fig. 8. As shown in Fig. 9, a control processing unit 130 is provided in the inside of the mobile phone 100. The control processing unit 130 includes a central processing unit (CPU) 121, a ROM 122, a RAM 123, a transmission/reception part 124, an input/output bus 128, an input signal circuit 126, an LF controller/amplifier 127, and a display control circuit 136.

The controlling button 114 and the controlling button 115 are connected to the input signal circuit 126. Further, the input signal circuit 126 is connected to the CPU 121 via the input/output bus 128. The ROM 122 and the RAM 123 are also connected to the input/output bus 128.

In the ROM 122, various image data including image data of respective tiles and the opponent characters displayed on the display device 113, and a program which controls the flow of the whole mahjong game and the like are stored. Further, in the ROM 122, the above-mentioned opening effect image data, the above-mentioned story effect image data, the above-mentioned character selection image data and the above-mentioned story effect image data are respectively stored in plural numbers. Further, in the ROM 122, the above-mentioned set data, the above-mentioned notification image data, the above-mentioned sound data and the like are stored.

The transmission/reception part 124 is also connected to the input/output bus 128. The transmission/reception part 124 serves to provide the communication with an external device via the Internet or the like. Further, a mobile radio communication part 131 and the LF controller/amplifier 127 are connected to the input/output bus 128, while a speaker 134 and a microphone 129 are connected to the LF controller/amplifier 127. The mobile radio communication part 131 includes an antenna and the like and performs the transmission of calling signals and the reception of called signals and also performs the transmission/reception of speechsignalsduringthecall. Further, thedisplaycontrol circuit 136 is also connected to the input/output bus 128. The display device 113 is connected to the display control circuit 136 and the display control circuit 136 supplies display signals to the display device 113 corresponding to the result of arithmetic processing in the CPU 21.

In the mobile phone 100 according to the second embodiment, the various programs, effect image data, set data and the like (hereinafter, also referred to as programs and the like) may be preliminarily stored in the ROM 122 or the like. Further, the mobile phone 100 may gain access to an external server or the like to request the transmission of the above-mentioned program and the like from the mobile phone and the above-mentioned programs transmitted from the server or the like may be received and stored.

Further, according to the present invention, a program for controlling the mahjong game and a program for displaying various images may be preliminarily stored in the mobile phone 100 and various image data or the like which become necessary along with the progress of the mahjong game may be transmitted from the server or the like. Further, in the present invention, the server or the like supplies various programs and image data stored in the server or the like to the mobile phone and the supplied programs are executed at the mobile phone 100. Still further, it may be also possible that when the above-mentioned various programs and image data are updated at the server or the like, a notification signal which notifies the updating is transmitted to the mobile phone 100, and the mobile phone which receives the notification signal is allowed to gain access to the server or the like whereby the mobile phone can receive the various updated programs and the image data from the server or the like and can store the various updated programs and the image data.

## Claims

1. A mahjong game machine which has a display device and provides a mahjong game in which a player plays a match against an opponent character, the mahjong game machine comprising:
game control means which has a controller and proceeds the mahjong game in response to a control signal transmitted from the controller;
effect image data storing means which stores a plurality of effect image data for displaying an effect image based on a story;
set data storing means which stores a plurality of set data on the setting of game rules corresponding to the plurality of effect image data;
a selection image display device which displays selection images which allow selecting the effect image data based on the controller;
an effect image display device which displays the effect images on the display device based on the selected effect image data when the selection images are displayed by the selection image display device; and
set means which performs the setting of the game rules based on the set data corresponding to the selected effect image data.

2. A mahj ong game machine according to claim 1, wherein the selection image display device displays the selection images in response to the finishing of the match between the player and the opponent character.

3. Amahjong game machine according to claim 1, wherein the selection image display device displays the selection images in response to the finishing of the match between the player and the opponent character with a result that the player wins.

4. A mahjong game control program for controlling a mahjong game machine which has a display device and provides a mahjong game in which a player plays a match against an opponent character, the mahjong game control program comprising the steps of:
proceeding the mahjong game in response to a control signal transmitted from a controller;
storing a plurality of effect image data for displaying an effect image based on a story;
storing a plurality of set data on the setting of game rules corresponding to the plurality of effect image data;
storing image data for displaying selection images which enable the selection of the effect image data by the controller;
displaying the effect images on the display device based on the selected effect image data when the selection images are displayed in the selection image display step; and
setting the game rules based on the set data corresponding to the selected effect image data.

5. A mahjong game control program according to claim 4, wherein the selection image display step displays the selection images in response to the finishing of the match between the player and the opponent character.

6. A mahjong game control program according to claim 4, wherein the selection image display step displays the selection images in response to the finishing of the match between the player and the opponent character with a result that the player wins.
